# EUROPEAN PATENT SPECIFICATION

(11) **EP 0 716 814 B1**
(45) Date of publication and mention of the grant of the patent: **27.05.1998**
(21) Application number: 95203201.9
(22) Date of filing: 22.11.1995
(51) Int. Cl.: A23L 1/325, A23B 4/06, A23B 4/08

(54) **Method for processing fish, in particular salmon, and device used with said method**
Verfahren zur Verarbeitung von Fisch, insbesondere Lachs, und Vorrichtung dafür
Méthode pour traiter le poisson, en particulier le saumon, et appareillage utilisé avec cette méthode

(30) Priority: 22.11.1994 NL 9401943; 03.04.1995 NL 1000026
(43) Date of publication of application: 19.06.1996
(73) Proprietor: H. van Wijnen B.V., 2921 LR Krimpen a/d Ijssel (NL)
(72) Inventor: de Snoo, Paul, NL-2861 CB Bergambacht (NL)
(74) Representative: Hooiveld, Arjen Jan Winfried

(56) References cited:
- WO-A-95/16364
- CA-A- 1 151 369
- FR-A- 2 137 873
- NL-C- 108 224
- US-A- 1 936 814
- PATENT ABSTRACTS OF JAPAN vol. 009, no. 331 (C-321), 25 December 1985 & JP-A-60 160839 (NICHIRO GIYOGIYOU KK), 22 August 1985, & DATABASE WPI Week 8540 Derwent Publications Ltd., London, GB; AN 85-245680 & JP-A-60 160 839 (NICHIRO GYOGO KK) , 22 August 1985
- PATENT ABSTRACTS OF JAPAN vol. 940, no. 010 & JP-A-06 292554 (TAIYO KAGAKU CO LTD), 21 October 1994,

## Description

The invention relates to a method for processing fish, in particular salmon, wherein the fish is cut into parts and the fish parts are subsequently bonded together by treating them with a bonding agent preferably comprising a mixture of fibrinogen and thrombin.

This bonding agent is widely used in the meat-processing industry. Fibrinogen is a protein, which can be industrially recovered from the blood of beef cattle and which in combination with thrombin forms fibrin. The actual function of fibrin is to enable coagulation of blood, but the strong fibrin network has also appeared to be suitable for bonding chunks of meat together.

In a publication by the leading producer of the bonding agent, Harimex B.V., "FIBRI FACTS" - Vol. 1 - Issue 1 (August 1993), an example is given of the use of the bonding agent, whereby chunks of beef are treated with the bonding agent, placed in a cylindrical mould and compressed by means of an compressed air-operated press. The mould is then cooled for a predetermined period of time, during which time the bonding is formed, after which the beef having the shape thus obtained can be readily cut into exactly equal parts.

An important aspect of the said method is that all chunks of beef of a roughly corresponding quality can be used, and consequently also those chunks of meat that would normally be unsaleable because of their deviating shape and/or weight. It has now become possible to cut the desired quantities with great precision from the bonded chunks of meat having the shape thus obtained, because said shape will remain constant. More important even is the fact that it is now possible to cut exactly the same weight quantities having the same shape.

Said publication furthermore makes mention of the fact that the bonding agent can be used for all sorts of red meat and also for fish.

With fish the importance of "portion control", that is, being able to deliver parts which constantly have exactly the same dimensions and practically exactly the same weight may be even more important than for meat. Think for example of the catering industry, where it is extremely important in the preparation of ready-to-eat meals that in a single action a measured quantity of the desired species of fish can be put on a plate or on a roll, and that it is not necessary to check with every new plate or roll whether one or several slices must be taken from a stock of unequal slices in order to obtain an even distribution. Furthermore the catering company will desire a certain dimension of the product dependent on its use.

In practice it has become apparent, however, that with fish a number of problems present themselves, in particular with smoked fish, such as smoked salmon, for example. Generally an oil film is present on the outside of smoked fish, which makes it practically impossible to apply the bonding agent. Instead of smoking the fish the characteristic smoked taste may also be obtained by injecting the fish with smoke essences, a technique which is known per se, which makes it possible to provide the bonding agent after all.

However, when fish parts treated with the bonding agent are placed in a mould spaces are formed between the respective fish parts and between the fish parts and the mould. When slices are cut from such a block of fish said spaces can be clearly distinguished. Apart from the fact that this results in a less attractive slice, which moreover may disintegrate, the main drawback is that said "portion control" cannot be absolutely ensured in this manner.

It has become apparent that it is not possible to remove the spaces thus formed by compressing the block of fish parts, since the bonding agent will be pressed out from between the fish parts and hardly any bonding, if at all, is obtained in that case. The shape of the fish parts, which varies from straight to distinctly curved in longitudinal direction, furthermore makes it necessary that in order to remove all spaces from the block a pressure of such magnitude must be exerted, that the typical structure of the fish is largely or entirely lost as a result of the deformation caused thereby.

It is noted that the present invention is not restricted to the preferred bonding agent comprising a mixture of fibrinogen and thrombin. Good results are also obtained with other bonding agents, in particular transglutaminase. In another preferred embodiment sodium chloride is added to the transglutaminase.

In the non-prepublished Dutch patent application Nr. 9401943 in the name of the same Applicant it is proposed, in order to obviate the above-described drawback, to place the fish parts in a mould after treating them with a bonding agent, whereby the spaces formed between the fish parts and between the fish and the boundaries of the mould on placing the fish parts in the mould are filled in the following manner. Part of the fish is minced, the minced part is treated with the bonding agent and the mixture thus obtained is used as a filler for the spaces formed. Prior to this the fish may be injected with a brine solution and smoke essences, using a known technique, and then be dried briefly.

An important drawback of the method according to the aforesaid Dutch patent application Nr. 9401943 is that it comprises relatively many steps and consequently is laborious, which makes the method disclosed therein less attractive from an economic point of view. Thus it is necessary, as has already been described above, to mince part of the fish, the minced part must then be treated with the bonding agent, after which the spaces formed between the fish parts and between the fish and the boundaries of the mould must be filled with the treated mixture. Moreover, the block obtained after said bonding must be cut into block segments, after which the block segments must be successively bonded to each other with the bonding agent consisting of fibrinogen and thrombin. In this manner a length of bonded fish block segments is obtained, from which slices having fixed dimensions and the desired weight can be cut at great speed with an industrial meat slicer.

International patent publication No. WO 95/16364 (Videra) to be taken into account according to Article 54 (3 and 4) EPC describes a method for processing salmon, wherein the salmon is cut into parts and the salmon parts are subsequently bonded together by a bonding agent containing a mixture of fibrinogen and thrombin

French patent document No 2,137,873 (Unilever) discloses a method for processing fish, for example salmon, wherein the fish is cut into fillets and the fillets are subsequently adhered using a bonding agent and pressing techniques, whereby the fillets are placed into a box-like mould.

The object of the invention is to provide a method and a device for processing fish, in particular salmon, which comprises fewer steps, as a result of which it becomes possible to obtain in a more efficient and consequently cheaper manner in particular slices of salmon having fixed dimensions and a desired weight for especially the catering industry.

In order to accomplish that objective a method according to the invention of the kind referred to in the introduction is characterized in accordance with Claim 1. By placing pieces of salmon having relatively small dimensions one on top of the other in a mould, the pieces will completely butt against each other - without any interspaces being formed - in that each piece will slightly deform because of the small variations in thickness, without the fish structure therein being damaged for that matter. Especially with salmon this is very important, because this type of fish has a fragile but especially characteristic (distinguishable) structure, and because a salmon exhibits relatively large variations in thickness lengthwise in comparison with other fish species. It will be apparent that in contrast to the method disclosed in the aforesaid Dutch patent application, said filling with a mixture of minced salmon and the bonding agent as well as said cutting into block segments is no longer necessary. In another preferred embodiment the present invention is applied for halibut. An important advantage is further that eventually slices of smoked salmon are obtained in which the original characteristic and distinguishable structure in the longitudinal direction of the salmon is retained.

In one embodiment of a method according to the invention at least substantially rectangular pieces are cut, said pieces having a length and a width which range, independently of each other, from 8 - 12 cm, in particular from 9 - 11 cm, but which are both preferably about 10 cm. These dimensions are to be recommended in the light of some applications, especially in the catering industry, the slices of salmon having a surface area approximately equal to that of a white tin-sandwich are obtained in this manner. The method furthermore provides an additional advantage for the retail trade, namely the fact that a fixed number of slices of salmon, for example four, is used per fixed packaged weight of the salmon, for example 100 g.

In another embodiment of a method according to the invention at least substantially rectangular pieces are cut, said pieces having a length and a width which range, independently of each other, from 3 - 7 cm, in particular from 4 - 6 cm, but which are both preferably about 5 cm. This advantageously results in slices of smoked salmon having a surface area approximately equal to that of various types of toast, crackers and the like. Furthermore it may be considered to use them in aeroplane catering, where platforms comprising food compartments having fixed dimensions are used.

In another embodiment of a method according to the invention the mould containing the massive column of fish is cooled/frozen to a temperature at which further separate processing of the massive column of fish is possible. This makes it possible to cut slices from the massive column of fish in a direction parallel to the longitudinal direction of the fish from which the pieces forming said massive column of fish originate. Furthermore, cooling/freezing has the advantage that the massive column of fish will expand, so that any small spaces between the respective fish pieces and between the fish pieces and the mould will be filled up.

The invention also relates to a device to be used with the method, whereby the device includes a rectangular mould provided with detachably interconnected side walls, bottom and cover parts, wherein the cover is movable in the longitudinal direction of the mould. This makes it possible to transport the mould in individual parts in an economic manner, whilst furthermore the cleaning of the mould can take place in a sanitary manner. Instead of using the detachable side walls, bottom and cover parts it may also be preferred to hinge said parts together, so that the parts are collapsible.

When placing the pieces of salmon one on top of the other the massive column of fish thus formed will not fall out of the mould, since the movable cover will move in upward direction, which may or may not take automatically, along with the growing column of fish.

The invention will be explained in more detail hereafter with reference to Figures illustrated in a drawing, wherein:
Figure 1 schematically shows the various steps of an embodiment of a method according to the invention;
Figures 2a, 2b and 2c show various separate parts of a mould used with the method according to Figure 1;
Figure 3 schematically shows, partly in cut-away view, the mould of Figure 2 as it is built up of the various parts; and
Figure 4 schematically shows an embodiment of a device according to the invention.

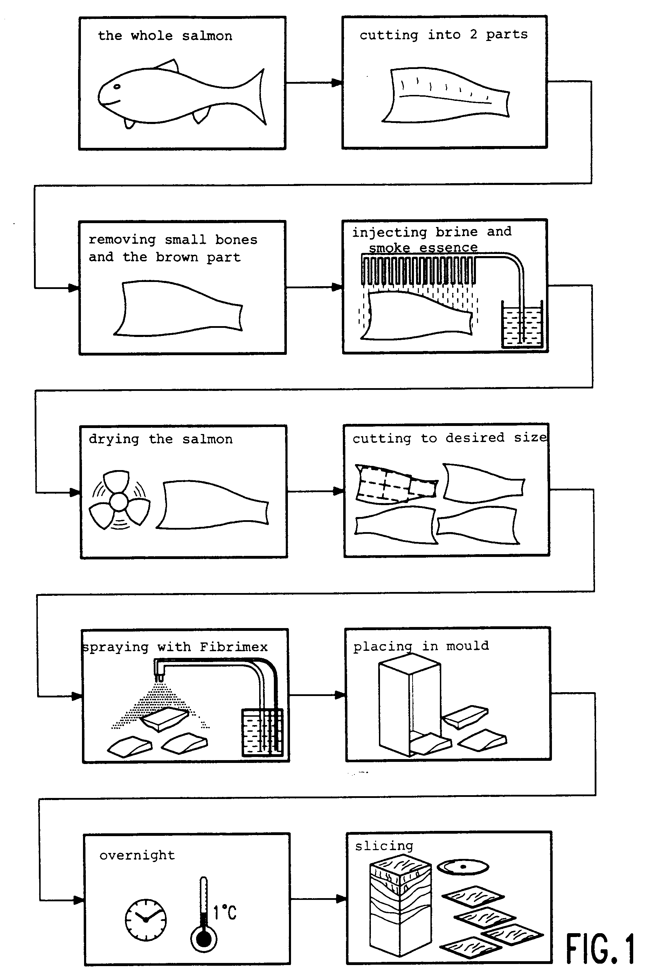

Figure 1 shows the various steps of a preferred embodiment of a method according to the invention. A whole salmon is first cut into two equal parts along its plane of symmetry, after which the bones and the so-called "brown part" are removed. Then the salmon halves are soaked in brine and injected with a smoke essence, after which maturing and drying takes place. Then each salmon half is cut into substantially rectangular pieces by means of a measuring block of plastic material in a direction at least substantially perpendicular to the longitudinal direction of the salmon. Although the pieces may mutually differ in thickness, each piece has a thickness varying little (seen along the original outer surface of the salmon), so that adjacent slices being placed in a mould mentioned hereunder abutt against each other, under slight deformation of the pieces, while maintaining the original fish structure. If the slices of salmon to be eventually obtained are to be used on for example a white tin-sandwich, said pieces will have a length and a width which may independently of each other range from 8 - 12 cm, in particular from 9 - 11 cm. More particularly both dimensions are about 10 cm, so that square slices are obtained. Then a bonding agent (preferably the bonding agent which is commercially available under the name of "Fibrimex") is sprayed on the rectangular slices of salmon, after which the pieces are placed in an elongated mould, with a bonding agent being provided between the respective slices. Said placing in the mould of the slices must be done in such a manner that the original longitudinal direction of the salmon from which the pieces originate extends parallel to the bottom of the mould. The advantage of this is that final slices of smoked salmon are obtained, wherein the original typical lengthwise structure of the salmon is retained. The mould containing the massive column of fish is cooled, so as to allow the bonding agent to complete the bonding process, and subsequently frozen, preferably to a temperature of -5°C to -15°C, in particular -8°C to -12°C, in order to enable easy "processing" of the massive column of fish. Finally the cold massive column of fish is cut into slices having fixed dimensions and the desired weight at great speed, whereby each slice has retained the original characteristic structure of the salmon in its longitudinal direction.

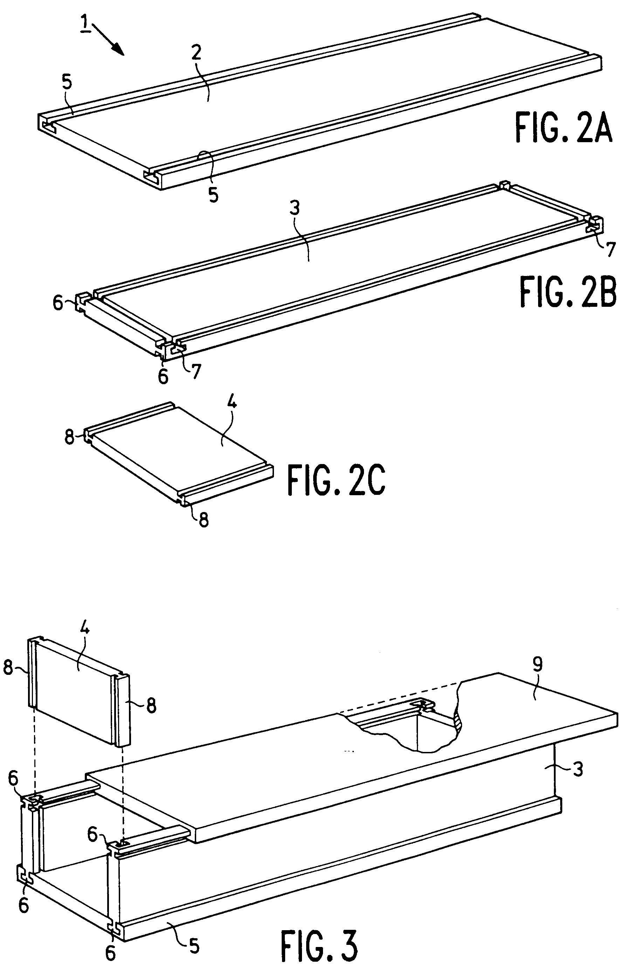

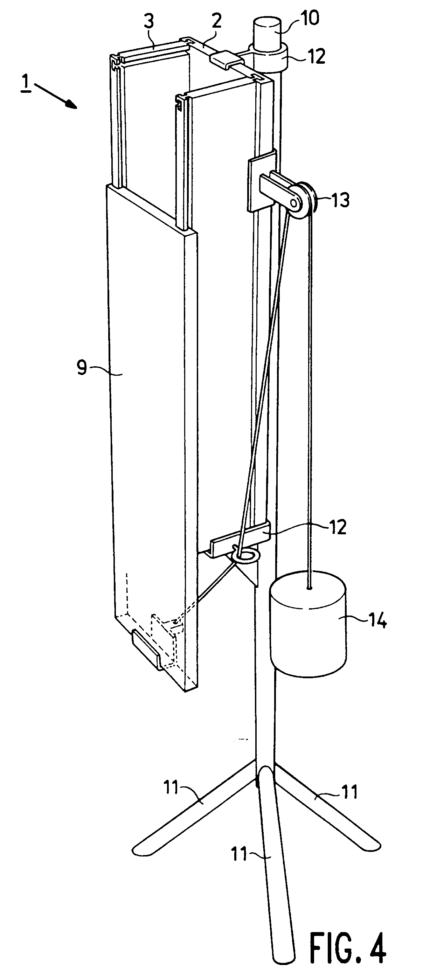

In Figures 2a, 2b and 2c various separate parts of a mould 1 as used with the method of Figure 1 can be distinguished. The mould 1 includes a bottom 2, two long side walls 3, two short side walls 4, as well as a cover (not shown). The bottom 2 comprises slots 5 along its longitudinal edges, into which corresponding sections 6 of the side walls 3 may be inserted. The side walls 3 in turn comprise slots 7 for receiving corresponding sections 8 of the short side walls 4 therein. Figure 3 shows the elongated mould 1 in assembled condition, provided with a cover 9. It will be apparent that the cover 9 is likewise provided with slots, into which sections 6 of the long side walls 3 may be inserted. In this manner a cover which is capable of sliding movement along said sections 6 in the longitudinal direction of the mould 1 is obtained, as will be explained in more detail with reference to Figure 4.

Figure 4 shows a device intended for being used with the method according to the invention, said device comprising the elongated mould 1 of Figures 2 and 3. Parts which correspond with parts illustrated in said Figures 2 and 3 are indicated by the same numerals. The elongated mould 1 is mounted in a frame, which is provided with a post 10 having legs 11. Metal clamps 12 are used, which detachably secure the mould 1 to the frame. The cover 9 is vertically movable along sections 6 of the long side walls 3 by means of a pulley construction 13 (using a counterweight 14), so that when the slices of salmon are stacked one on top of the other in the mould 1, the massive column of fish thus formed cannot fall out of the mould 1, since the cover 9 is moved along with the growing column of fish, manually in this embodiment. In a preferred embodiment the cover 9 is operated pneumatically, hydraulically or electrically.

## Claims

1. A method for processing fish, in particular salmon or halibut, wherein the fish is cut into parts and the fish parts are subsequently bonded together by a bonding agent,
characterized in that:
- the fish is cut into two halves along its plane of symmetry, after which each half is cut into pieces,
- the pieces are placed on top of each other in an elongated mould extending in vertical direction, with the bonding agent being provided between the respective pieces, whereby the original longitudinal direction of the fish from which the pieces have been cut extends parallel to the bottom of the mould,
- allowing the pieces to deform such that adjacent pieces will butt against each other without interspaces formed between the adjacent pieces and without the fish structure being damaged,
- allowing the bonding agent to cure wherein a massive column of fish is formed in the mould,
- removing the mould so as to be able to cut slices from the massive column of fish in a direction parallel to the original longitudinal direction of the fish from which the pieces forming said massive column of fish originate.

2. A method according to claim 1, wherein at least substantially rectangular pieces are cut, said pieces having a length and a width which range, independently of each other, from 8 - 12 cm, in particular from 9 - 11 cm, but which are both preferably about 10 cm.

3. A method according to claim 1, wherein at least substantially rectangular pieces are cut, said pieces having a length and a width which range, independently of each other, from 3 - 7 cm, in particular from 4 - 6 cm, but which are both preferably about 5 cm.

4. A method according to any one of the preceding claims 1 - 3, wherein said mould containing said massive column of fish is cooled/frozen to a temperature at which further separate processing of the massive column of fish is possible.

5. A device to be used with the method according to any one of the preceding claims 1 - 4, characterized in that said device comprises a rectangular mould,
provided with detachably interconnected side walls, bottom and cover parts, wherein said cover is movable in the longitudinal direction of said mould.

## Patentansprüche

1. Ein Verfahren zur Verarbeitung von Fisch, insbesondere Lachs oder Heilbutt, bei dem der Fisch in Teile geschnitten und die Fischteile nachfolgend durch ein Bindemittel aneinander gebunden werden,
dadurch gekennzeichnet, daß:
- der Fisch in zwei Hälften entlang seiner Symmetrieebene geschnitten wird, wonach jede Hälfte in Stücke geschnitten wird,
- die Stücke in einer sich in vertikaler Richtung erstreckenden länglichen Form übereinander plaziert werden, wobei das Bindemittel zwischen den jeweiligen Stücken angeordnet wird und die ursprüngliche Längsrichtung des Fisches, aus dem die Stücke geschnitten worden sind, sich parallel zu der Unterseite der Form erstreckt,
- Verformenlassen der Stücke in der Weise, daß benachbarte Stücke ohne zwischen den benachbarten Stücken ausgebildete Zwischenräume und ohne Schädigung der Fischstruktur gegeneinanderstoßen werden,
- Härtenlassen des Bindemittels, wodurch eine massive Säule aus Fisch in der Form ausgebildet wird,
- Entfernen der Form zum Schneiden von Scheiben von der massiven Säule aus Fisch in einer zu der ursprünglichen Längsrichtung des Fisches, aus dem die die massive Säule aus Fisch formenden Stücke herrühren, parallelen Richtung.

2. Ein Verfahren nach Anspruch 1, worin wenigstens im wesentlichen rechteckige Stücke geschnitten werden, wobei die Stücke eine Länge und eine Breite aufweisen, die, unabhängig voneinander, im Bereich von 8 bis 12 cm, insbesondere von 9 bis 11 cm liegen, aber beide vorzugsweise ungefähr 10 cm betragen.

3. Ein Verfahren nach Anspruch 1, worin wenigstens im wesentlichen rechteckige Stücke geschnitten werden, wobei die Stücke eine Länge und eine Breite aufweisen, die, unabhängig voneinander, im Bereich von 3 bis 7 cm, insbesondere von 4 bis 6 cm liegen, aber beide vorzugsweise ungefähr 5 cm betragen.

4. Ein Verfahren nach irgendeinem der vorangehenden Ansprüche 1 bis 3, worin die die massive Säule aus Fisch enthaltende Form auf eine Temperatur gekühlt/eingefroren wird, bei der eine weitere separate Verarbeitung der massiven Säule aus Fisch möglich ist.

5. Vorrichtung für ein Verfahren gemäß irgendeinem der vorangehenden Ansprüche 1 bis 4, dadurch gekennzeichnet, daß die Vorrichtung eine rechteckige Form umfaßt, die mit lösbar miteinander verbundenen Seitenwänden, Boden- und Deckelteilen versehen ist, wobei der Deckel in der Längsrichtung der Form bewegbar ist.

## Revendications

1. Procédé de traitement du poisson, en particulier du saumon ou du flétan, dans lequel le poisson est découpé en parties et les parties du poisson sont ensuite réunies entre elles par un agent de liaison,
caractérisé en ce que :
- le poisson est découpé en deux moitiés le long de son plan de symétrie, après quoi chaque moitié est découpée en morceaux,
- les morceaux sont placés les uns au-dessus des autres dans un moule allongé, s'étendant dans une direction verticale, l'agent de liaison étant fourni entre les morceaux respectifs, grâce à quoi, la direction longitudinale originale du poisson, dont les morceaux ont été découpés, s'étend parallèlement au fond du moule,
- on laisse les morceaux se déformer de telle façon que les morceaux adjacents viennent buter les uns contre les autres sans espaces intermédiaires formés entre les morceaux adjacents et sans que la structure du poisson ne soit endommagée,
- on laisse l'agent de liaison agir de sorte qu'une colonne massive de poisson est formée dans le moule,
- on retire le moule de façon à pouvoir découper des tranches à partir de la colonne massive de poisson dans une direction parallèle à la direction longitudinale d'origine du poisson dont les morceaux formant ladite colonne massive de poisson proviennent.

2. Procédé selon la revendication 1, dans lequel au moins des morceaux essentiellement rectangulaires sont découpés, lesdits morceaux ayant une longueur et une largeur qui se situent, indépendamment l'une de l'autre entre 8 et 12 cm, en particulier entre 9 et 11 cm, mais sont tous deux de préférence d'environ 10 cm.

3. Procédé selon la revendication 1, dans lequel au moins des morceaux essentiellement rectangulaires sont découpés, lesdits morceaux ayant une longueur et une largeur qui se situent, indépendamment l'une de l'autre, entre 3 et 7 cm, en particulier entre 4 et 6 cm, mais qui sont de préférence tous deux de l'ordre de 5 cm.

4. Procédé selon l'une quelconque des revendications 1 à 3, dans lequel ledit moule comprenant ladite colonne massive de poisson est refroidie/réfrigérée jusqu'à une température à laquelle devient possible un autre traitement séparé de la colonne massive de poisson.

5. Dispositif destiné à être utilisé avec le procédé selon l'une quelconque des revendications 1 à 4, caractérisé en ce que ledit dispositif comprend un moule rectangulaire pourvu de parties de couvercle et de fond et de parois latérales interconnectées de façon amovible, dans lequel ledit couvercle est mobile dans la direction longitudinale dudit moule.
